# EUROPEAN PATENT APPLICATION

(11) **EP 4 324 714 A1**
(43) Date of publication of application: **21.02.2024**
(21) Application number: 22807620.4
(22) Date of filing: 11.04.2022
(51) Int. Cl.: B60W 50/14, B60W 60/00, B60W 40/08, B60W 10/20, B60K 35/00, B60W 50/00

(54) **APPARATUS, METHOD, AND COMPUTER PROGRAM FOR PROVIDING VIRTUAL DRIVER SERVICE**

(30) Priority: 14.05.2021 KR 20210062322
(71) Applicant: Dasan Global New Tech Group Co., Ltd., Seoul 08380 (KR)
(72) Inventor: YOU, Cheol Jong, Seoul 07987 (KR)
(74) Representative: Manitz Finsterwald Patent- und Rechtsanwaltspartnerschaft mbB
(86) International application number: PCT/KR2022/005167
(87) International publication number: WO 2022/239972

(57) **Abstract**

An apparatus for providing a virtual driver service includes a hologram output unit configured to output a first hologram of a virtual driver to a projected area inside a vehicle; a driving information derivation unit configured to derive driving information based on navigation information for autonomous driving of the vehicle; and a virtual driver control unit configured to control a movement of the virtual driver based on the driving information. The hologram output unit outputs the first hologram of the virtual driver in which the movement of the virtual driver is reflected.

## Description

### TECHNICAL FIELD

The present disclosure relates to an apparatus, method and computer program for providing a virtual driver service.

### BACKGROUND

A self-driving car is a car that uses various sensors, such as a high-definition map, a global positioning system (GPS), etc., to autonomously perceive driving situations and travel to its destination even without requiring a driver to manipulate a steering wheel, an accelerator pedal, a brake, etc.

The self-driving car is equipped with autonomous driving levels ranging from no automation to full automation based on how much the system is involved in driving and how the driver controls the car. The autonomous driving levels include a total of 6 levels: Level 0-No Automation; Level 1-Assisted Driving Automation; Level 2-Partial Automation; Level 3-Conditional Automation; Level 4-High Automation; and Level 5-Full Automation.

Regarding the autonomous driving, Korean Patent Laid-open Publication No. 2017-0054186 discloses an apparatus and method for controlling an autonomous vehicle.

### DISCLOSURE OF THE INVENTION

### PROBLEMS TO BE SOLVED BY THE INVENTION

The present disclosure provides an apparatus, method and computer program for providing a virtual driver service to output a first hologram of a virtual driver to a projected area inside a vehicle.

The present disclosure provides an apparatus, method and computer program to derive driving information based on navigation information for autonomous driving of a vehicle, control a movement of a virtual driver based on the driving information, and output a first hologram in which the movement of the virtual driver is reflected.

However, the problems to be solved by the present disclosure are not limited to the above-described problems. There may be other problems to be solved by the present disclosure.

### MEANS FOR SOLVING THE PROBLEMS

According to an aspect of the present disclosure, an apparatus for providing a virtual driver service includes a hologram output unit configured to output a first hologram of a virtual driver to a projected area inside a vehicle; a driving information derivation unit configured to derive driving information based on navigation information for autonomous driving of the vehicle; and a virtual driver control unit configured to control a movement of the virtual driver based on the driving information. The hologram output unit outputs the first hologram of the virtual driver in which the movement of the virtual driver is reflected.

According to another aspect of the present disclosure, a method for providing a virtual driver service includes outputting a first hologram of a virtual driver to a projected area inside a vehicle; deriving driving information based on navigation information for autonomous driving of the vehicle; controlling a movement of the virtual driver based on the driving information; and outputting the first hologram of the virtual driver in which the movement of the virtual driver is reflected.

According to yet another aspect of the present disclosure, a computer program stored in a medium including a sequence of instructions for providing a virtual driver service, which when executed by a computing device, cause the computing device to output a first hologram of a virtual driver to a projected area inside a vehicle; derive driving information based on navigation information for autonomous driving of the vehicle; control a movement of the virtual driver based on the driving information; and output the first hologram of the virtual driver in which the movement of the virtual driver is reflected.

The above-described aspects are provided by way of illustration only and should not be construed as liming the present disclosure. Besides the above-described embodiments, there may be additional embodiments described in the accompanying drawings and the detailed description.

### EFFECTS OF THE INVENTION

According to any one of the above-described means for solving the problems of the present disclosure, the present disclosure provides an apparatus, method and computer program to output a first hologram of a virtual driver to a projected area inside a vehicle and display the virtual driver accurately sitting in a driver seat.

The present disclosure provides an apparatus, method and computer program to enable a passenger sitting in a passenger seat or a back seat of a vehicle to perceive that the vehicle is correctly traveling according to driving information by controlling a movement of the virtual driver based on the driving information of the vehicle.

### BRIEF DESCRIPTION OF THE DRAWINGS

**FIG. 1** is a configuration diagram of a virtual driver service providing system according to an embodiment of the present disclosure.
**FIG. 2** is a configuration diagram of a virtual driver service providing apparatus according to an embodiment of the present disclosure.
**FIG. 3** illustrates an example provided to describe a process of outputting a first hologram by the apparatus according to an embodiment of the present disclosure.
**FIG. 4** illustrates an example provided to describe a process of outputting first and second holograms by the apparatus according to an embodiment of the present disclosure.
**FIG. 5** is a flowchart showing a method of providing a virtual driver service by the virtual driver service providing apparatus according to an embodiment of the present disclosure.

### BEST MODE FOR CARRYING OUT THE INVENTION

Hereinafter, embodiments of the present disclosure will be described in detail with reference to the accompanying drawings so that the present disclosure may be readily implemented by a person with ordinary skill in the art. However, it is to be noted that the present disclosure is not limited to the embodiments but can be embodied in various other ways. In drawings, parts irrelevant to the description are omitted for the simplicity of explanation, and like reference numerals denote like parts through the whole document.

Through the whole document, the term "connected to" or "coupled to" that is used to designate a connection or coupling of one element to another element includes both a case that an element is "directly connected or coupled to" another element and a case that an element is "electronically connected or coupled to" another element via still another element. Further, through the whole document, the term "comprises or includes" and/or "comprising or including" used in the document means that one or more other components, steps, operation and/or existence or addition of elements are not excluded in addition to the described components, steps, operation and/or elements unless context dictates otherwise.

Through the whole document, the term "unit" includes a unit implemented by hardware, a unit implemented by software, and a unit implemented by both of them. One unit may be implemented by two or more pieces of hardware, and two or more units may be implemented by one piece of hardware.

Through the whole document, a part of an operation or function described as being carried out by a terminal or device may be carried out by a server connected to the terminal or device. Likewise, a part of an operation or function described as being carried out by a server may be carried out by a terminal or device connected to the server.

Hereinafter, the present disclosure will be explained in detail with reference to the accompanying configuration views or process flowcharts.

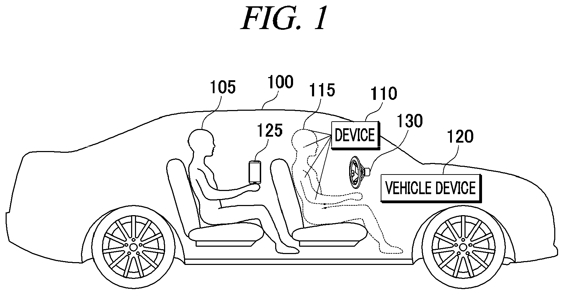

**FIG. 1** is a configuration diagram of a virtual driver service providing system according to an embodiment of the present disclosure. Referring to **FIG. 1****,** a virtual driver service providing system 1 may include a virtual driver service providing apparatus 110 and a server (not illustrated). The virtual driver service providing system 1 may also include a vehicle device 120 and a user device 125. The virtual driver service providing apparatus 110, the server, the vehicle device 120 and the user device 125 are illustrated as example components which can be controlled by the virtual driver service providing system 1.

The components of the virtual driver service providing system 1 illustrated in **FIG. 1** are typically connected to each other via a network. For example, as illustrated in **FIG**. **1****,** the virtual driver service providing apparatus 110 may be connected to the server, the vehicle device 120 or the user device 125 simultaneously or sequentially.

The term "network" refers to a connection structure that enables information exchange between nodes such as devices, servers, etc. and includes LAN (Local Area Network), WAN (Wide Area Network), Internet (WWW: World Wide Web), a wired or wireless data communication network, a telecommunication network, a wired or wireless television network, and the like. Examples of the wireless data communication network may include 3G, 4G, 5G, WIMAX (World Interoperability for Microwave Access), Wi-Fi, Bluetooth communication, infrared communication, ultrasonic communication, VLC (Visible Light Communication), LiFi, and the like, but are not limited thereto.

The virtual driver service providing apparatus 110 may communicate with the vehicle device 120. For example, the virtual driver service providing apparatus 110 may receive, from the vehicle device 120, navigation information for autonomous driving of a vehicle 100. Herein, the navigation information may include a departure, a waypoint, a destination, driving route information including time required to reach the destination, vehicle control information for controlling the vehicle 100 to drive autonomously, road information, traffic information, and weather information. Herein, the vehicle control information may include, for example, direct control information, such as a steering timing, a steering speed and a steering angle of a steering device 130, an acceleration timing, an acceleration degree, an acceleration duration, a braking timing, a braking level and a braking duration, and indirect control information, such as a position and a speed of a neighboring vehicle and a direction and timing of the vehicle 100.

The virtual driver service providing apparatus 110 may communicate with the user device 125. The virtual driver service providing apparatus 110 may receive, from the user device 125, setting information of a virtual driver 115. The setting information of the virtual driver 115 may include, for example, position information of a projected area, posture information and position information of each body part of the virtual driver 115, and character information. For example, the virtual driver service providing apparatus 110 may receive, from the user device 125, posture information of the virtual driver 115, such as whether the upper body of the virtual driver 115 is in close contact with the driver seat, and position information of each body part of the virtual driver 115, such as position information of the hands of the virtual driver 115.

The virtual driver service providing apparatus 110 may output a first hologram of the virtual driver 115 to a projected area inside the vehicle 100. Herein, the projected area may be a driver seat area of the vehicle 100.

The virtual driver service providing apparatus 110 may adjust a position of the projected area, a posture of the virtual driver 115, and positions of body parts of the virtual driver 115 based on the received setting information. For example, the virtual driver service providing apparatus 110 may adjust a position of the projected area around the driver seat based on the setting information. For another example, when the upper body of the virtual driver 115 is in too close contact with the driver seat, the virtual driver service providing apparatus 110 may adjust the posture of the virtual driver 115 based on the setting information so that the upper body of the virtual driver 115 comes close to the steering device 130. For yet another example, when positions of the hands of the virtual driver 115 are away from the steering device 130, the virtual driver service providing apparatus 110 may adjust the positions of the hands of the virtual driver 115 to be placed on the steering device 130 based on the setting information.

The virtual driver service providing apparatus 110 may derive driving information based on the navigation information for autonomous driving of the vehicle 100. For example, the driving information may include a steering timing, a steering speed and a steering angle of the steering device 130, an acceleration timing, an acceleration degree, an acceleration duration, a braking timing, a braking level and a braking duration.

The virtual driver service providing apparatus 110 may control a movement of the virtual driver 115 based on the driving information. For example, the virtual driver service providing apparatus 110 may control a movement of the virtual driver 115 so that the virtual driver 115 can perform virtual manipulation of the steering device 130 based on the driving information and a position of the steering device 130. Herein, the virtual manipulation enables the virtual driver 115 to appear to actually manipulate the steering device 130 by synchronizing a movement of the virtual driver 115 with an operation of the steering device 130 based on the driving information.

According to an embodiment, the steering device 130 built in the vehicle 100 may be exposed, and the virtual driver service providing apparatus 110 may output the first hologram of the virtual driver 115 in which the movement of the virtual driver 115 is reflected. In this case, the virtual driver service providing apparatus 110 may output only the first hologram, but may not output a second hologram to be described later.

According to an embodiment, if the steering device 130 of the vehicle 100 is built in the vehicle 100, the virtual driver service providing apparatus 110 may output a second hologram of a virtual steering device in addition to the first hologram.

The virtual driver service providing apparatus 110 may control an operation of the virtual driver 115 to manipulate the virtual steering device based on the driving information.

The virtual driver service providing apparatus 110 may recognize a spoken voice of a passenger 105 in the vehicle 100 and enable the virtual driver 115 to have a conversation with the passenger 105 based on the recognized voice. For example, when recognizing a spoken voice of the passenger 105, the virtual driver service providing apparatus 110 may transmit the recognized voice to the server (not illustrated) and then receive, from the server (not illustrated), a response derived based on the voice.

The virtual driver service providing apparatus 110 may output a response based on the setting information of the virtual driver 115. For example, the virtual driver service providing apparatus 110 may output a response based on the character information of the virtual driver 115. Herein, the character information may include any one character selected by the passenger 105 from among a plurality of female characters, a plurality of male characters, and a plurality of game/animal characters. For example, the character information of the virtual driver 115 may include a character, a movement, a facial expression, a tone, etc. of the virtual driver 115 expressed in different ways depending on a predetermined gesture-related movement, facial expression or tone of each character.

For example, if a female secretary character is selected as the virtual driver 115 from among the plurality of female characters, the virtual driver service providing apparatus 110 may enable the virtual driver 115 expressed with businesslike gestures and facial expression expressions in a polite tone to have a conversation with the passenger 105. For another example, if a male bodyguard character is selected as the virtual driver 115 from among the plurality of male characters, the virtual driver service providing apparatus 110 may enable the virtual driver 115 expressed with polite gestures and facial expressions in an impassive tone to have a conversation with the passenger 105. For yet another example, if a penguin character is selected as the virtual driver 115 from among the plurality of game/animal characters, the virtual driver service providing apparatus 110 may enable the virtual driver 115 expressed with unique gestures, facial expressions and cute reactions in a cute tone to have a conversation with the passenger 105. The vehicle device 120 may be operatively coupled to communicate with the virtual driver service providing apparatus 110.

The vehicle device 120 may transmit, to the virtual driver service providing apparatus 110, navigation information for autonomous driving of the vehicle 100. The vehicle device 120 may include a navigation device, an infotainment device of the vehicle 100, or the like.

When the vehicle device 120 supports the virtual driver service, the vehicle device 120 may receive an input of setting information of the virtual driver 115 from the passenger 105 and transmit the received setting information of the virtual driver 115 to the virtual driver service providing apparatus 110. In this case, the setting information of the virtual driver 115 may be transmitted to the virtual driver service providing apparatus 110 via the server (not illustrated).

However, when the vehicle device 120 does not support the virtual driver service, the user device 125 may receive an input of setting information of the virtual driver 115 from the passenger 105 through a virtual driver service providing app and transmit the received setting information of the virtual driver 115 to the virtual driver service providing apparatus 110. In this case, the setting information of the virtual driver 115 may be transmitted to the virtual driver service providing apparatus 110 via the server.

The setting information of the virtual driver 115 may be set up through the virtual driver service providing app installed on the user device 125 or the vehicle device 120.

The user device 125 may set up character information, personality, costume, etc. of the virtual driver 115. Herein, the character information, personality, costume, etc. of the virtual driver 115 may be set up by the passenger 105 through purchase or rental from the virtual driver service providing app. For example, when the passenger 105 selects a female secretary character from among a plurality of characters, a bubbly personality from among a plurality of personalities and a business suit from among a plurality of costumes through the virtual driver service providing app of the user device 125, the passenger 105 may set up the virtual driver 115 to be expressed as a female secretary character wearing a business suit and showing gestures and facial expressions with a bubbly personality in a bubbly tone. The user device 125 may set up a position of the projected area in the vehicle 100, a posture of the virtual driver 115, and positions of body parts of the virtual driver 115. For example, the user device 125 may set up an approximate posture and position of the virtual driver 115 positioned in the driver seat. In this case, the user device 125 may set up positions of body parts (for example, positions of the hands) of the virtual driver 115 in detail with reference to the first hologram of the virtual driver 115 which is output to the projected area. In this case, the user device 125 may transmit the posture information and position information of the virtual driver 115 to the virtual driver service providing apparatus 110.

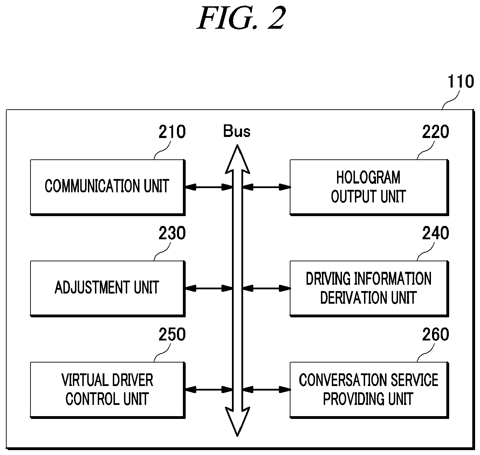

**FIG. 2** is a configuration diagram of a virtual driver service providing apparatus according to an embodiment of the present disclosure. Referring to **FIG. 2****,** the virtual driver service providing apparatus 110 may include a communication unit 210, a hologram output unit 220, an adjustment unit 230, a driving information derivation unit 240, a virtual driver control unit 250, and a conversation service providing unit 260.

The communication unit 210 may communicate with at least one of the vehicle device 120 or the user device 125. For example, the communication unit 210 may receive setting information of the virtual driver 115 from the user device 125. Herein, the setting information of the virtual driver 115 may include position information of a projected area for the virtual driver 115 selected by the passenger 105, posture information and position information of each body part of the virtual driver 115, character information, etc.

The communication unit 210 may receive, from the user device 125 or the vehicle device 120, navigation information for autonomous driving of the vehicle 100. Herein, the navigation information may include a departure, a waypoint, a destination, driving route information including time required to reach the destination, vehicle control information for controlling the vehicle 100 to drive autonomously, road information, traffic information, and weather information. Herein, the vehicle control information may include, for example, direct control information, such as a steering timing, a steering speed and a steering angle of the steering device 130, an acceleration timing, an acceleration degree, an acceleration duration, a braking timing, a braking level and a braking duration, and indirect control information, such as a position and a speed of a neighboring vehicle and a direction and timing of the vehicle 100.

The hologram output unit 220 may output the first hologram of the virtual driver 115 to the projected area inside the vehicle 100.

The adjustment unit 230 may adjust a position of the projected area, a posture of the virtual driver 115, and positions of body parts of the virtual driver 115 based on the received setting information. For example, the adjustment unit 230 may adjust a position of the projected area around the driver seat based on the setting information. For another example, when the upper body of the virtual driver 115 is in close contact with the driver seat, the adjustment unit 230 may adjust the posture of the virtual driver 115 based on the setting information so that the upper body of the virtual driver 115 comes close to the steering device 130. For yet another example, when positions of the hands of the virtual driver 115 are away from the steering device 130 based on the setting information, the adjustment unit 230 may adjust the positions of body parts of the virtual driver 115 so that the hands of the virtual driver 115 are placed on the steering device 130.

The driving information derivation unit 240 may derive driving information based on the navigation information for autonomous driving of the vehicle 100.

The virtual driver control unit 250 may control a movement of the virtual driver 115 so that the virtual driver 115 can perform virtual manipulation of the steering device 130 based on the driving information and a position of the steering device 130.

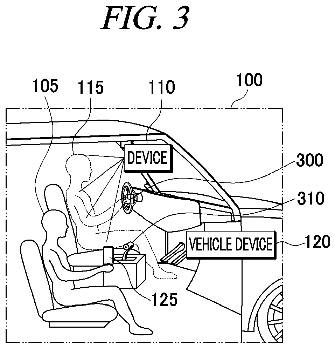

The hologram output unit 220 may output the first hologram of the virtual driver 115 in which the movement of the virtual driver 115 is reflected. The process of outputting the first hologram will be described in detail with reference to **FIG. 3****.**

**FIG.** 3 illustrates an example provided to describe a process of outputting a first hologram by the apparatus according to an embodiment of the present disclosure.

Referring to **FIG. 3****,** when the steering device 130 of the vehicle 100 is exposed, the hologram output unit 220 may output the first hologram of the virtual driver to the projected area inside the vehicle 100. For example, the hologram output unit 220 may output the first hologram in which the virtual driver 115's head, trunk, arms, legs, etc. are displayed based on the position information of the projected area and the posture information and position information of each body part of the virtual driver 115 based on the setting information received from the user device 125.

The driving information derivation unit 240 may derive driving information based on the navigation information for autonomous driving of the vehicle 100. For example, if the current position of the vehicle 100 is Gangnam Station and the passenger 105 wants to go to Gwanghwamun, the driving information derivation unit 240 may derive a steering timing, a steering speed and a steering angle of the steering device 130, an acceleration timing, an acceleration degree, an acceleration duration, a braking timing, a braking degree and a braking duration based on "Departure: Gangnam Station" and "Destination: Gwanghwamun".

The virtual driver control unit 250 may control a movement of the virtual driver 115 based on the driving information. Herein, the virtual driver control unit 250 may control a movement of the virtual driver 115 so that the virtual driver 115 can perform virtual manipulation of the steering device 130 based on the driving information and a position of the steering device 130. Herein, the virtual manipulation enables the virtual driver 115 to appear to actually manipulate the steering device 130 by synchronizing a movement of the virtual driver 115 with an operation of the steering device 130 based on the driving information.

If the steering device 130 built in the vehicle 100 is exposed, the hologram output unit 220 may output the first hologram of the virtual driver 115 in which the movement of the virtual driver 115 is reflected.

For example, the virtual driver control unit 250 may control a movement of the virtual driver 115 based on the position of the steering device 130 so that the hands of the virtual driver 115 are expressed as holding the steering device 130.

Then, when the vehicle 100 drives straight ahead or makes a left turn, a right turn or a U-turn, the virtual driver control unit 250 may control a movement of the virtual driver 115 so that the virtual driver 115 can perform virtual manipulation of the steering device 130 based on the driving information of the vehicle 100 and the position of the steering device 130. In this case, a hand movement of the virtual driver 115 may be expressed as driving the vehicle 100 in synchronization with the driving information.

For example, when the vehicle 100 is scheduled to drive straight ahead, the virtual driver control unit 250 may control a movement of the virtual driver 115 based on the driving information of the vehicle 100 so that the hands of the virtual driver 115 are expressed as holding the steering device 130. For another example, when the vehicle 100 is scheduled to make a right turn (or a left turn), the virtual driver control unit 250 may control a movement of the virtual driver 115 based on the driving information of the vehicle 100 so that the virtual driver 115 is expressed as turning the steering device 130 right (or left). For yet another example, when the vehicle 100 is scheduled to make a U-turn, the virtual driver control unit 250 may control a movement of the virtual driver 115 based on the driving information of the vehicle 100 so that the virtual driver 115 is expressed as turning the steering device 130 to the end in one direction to make a U-turn. For still another example, when the vehicle 100 arrives at a destination, the virtual driver control unit 250 may control a movement of the virtual driver 115 based on the driving information of the vehicle 100 so that the virtual driver 115 is expressed as parking the vehicle 100 using a gear knob 310.

Referring back to **FIG. 2****,** if the steering device 130 of the vehicle 100 is built in the vehicle 100, the hologram output unit 220 may further output a second hologram of the virtual steering device.

The virtual driver control unit 250 may control a movement of the virtual driver 115 to perform virtual manipulation of the virtual steering device based on the driving information.

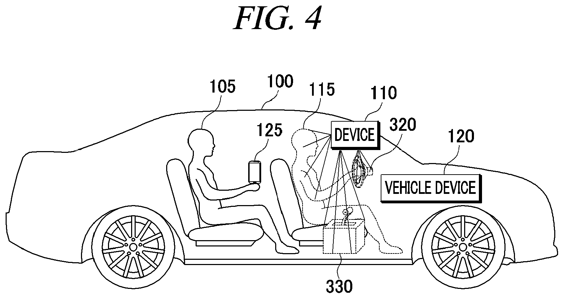

The hologram output unit 220 may output the first hologram of the virtual driver 115 in which the movement of the virtual driver 115 is reflected, and the second hologram of the virtual steering device. The process of outputting the first hologram and the second hologram will be described in detail with reference to **FIG. 4****.**

**FIG. 4** illustrates an example provided to describe a process of outputting first and second holograms by the apparatus according to an embodiment of the present disclosure.

The hologram output unit 220 may output the first hologram of the virtual driver 115 to the projected area inside the vehicle 100. For example, the hologram output unit 220 may output the first hologram in which the virtual driver 115's head, trunk, arms, legs, etc. are displayed based on the position information of the projected area and the posture information and position information of each body part of the virtual driver 115.

The hologram output unit 220 may output a second hologram of a virtual steering device 320 in addition to the first hologram.

The driving information derivation unit 240 may derive driving information based on the navigation information for autonomous driving of the vehicle 100. For example, in case of turning right 300 m ahead, the driving information derivation unit 240 may derive driving information including "10 seconds later" as a steering timing and "90 degrees" as a steering angle of the steering device 130. For another example, if a front vehicle stops suddenly, the driving information derivation unit 240 may derive driving information including "immediately" as a braking timing and "hard" as a braking level.

The virtual driver control unit 250 may control a movement of the virtual driver 115 so that the virtual driver 115 can perform virtual manipulation of the virtual steering device 320 based on the driving information. Herein, the virtual driver control unit 250 may control a movement of the virtual driver 115 so that the virtual driver 115 can perform virtual manipulation of the virtual steering device 320 based on the driving information and a position of the virtual steering device 320. Herein, the virtual manipulation enables the virtual driver 115 to appear to actually manipulate the virtual steering device 320 by synchronizing a movement of the virtual driver 115 with an operation of the virtual steering device 320 based on the driving information.

If the steering device 130 is built in the vehicle 100, the hologram output unit 220 may output the first hologram of the virtual driver 115 in which the movement of the virtual driver 115 is reflected.

For example, the virtual driver control unit 250 may control a movement of the virtual driver 115 based on the position of the virtual steering device 320 so that the hands of the virtual driver 115 are expressed as holding the virtual steering device 320.

Then, when the vehicle 100 drives straight ahead or makes a left turn, a right turn or a U-turn, the virtual driver control unit 250 may control a movement of the virtual driver 115 so that the virtual driver 115 can perform virtual manipulation of the virtual steering device 320 based on the driving information of the vehicle 100.

For example, when the vehicle 100 is scheduled to drive straight ahead, the virtual driver control unit 250 may control a movement of the virtual driver 115 based on the driving information of the vehicle 100 and the position of the virtual steering device 320 so that the hands of the virtual driver 115 are expressed as holding the virtual steering device 320. For another example, when the vehicle 100 is scheduled to make a right turn (or a left turn), the virtual driver control unit 250 may control a movement of the virtual driver 115 based on the driving information of the vehicle 100 and the position of the virtual steering device 320 so that the virtual driver 115 is expressed as turning the steering device 130 right (or left). For yet another example, when the vehicle 100 is scheduled to make a U-turn, the virtual driver control unit 250 may control a movement of the virtual driver 115 based on the driving information of the vehicle 100 and the position of the virtual steering device 320 so that the virtual driver 115 is expressed as turning the steering device 130 to the end in one direction to make a U-turn. For still another example, when the vehicle 100 arrives at a destination, the virtual driver control unit 250 may control a movement of the virtual driver 115 based on the driving information of the vehicle 100 and the position of the virtual steering device 320 so that the virtual driver 115 is expressed as parking the vehicle 100 using a virtual gear knob 320.

The conversation service providing unit 260 may provide a service that recognizes a spoken voice of the passenger 105 in the vehicle 100 and enables the virtual driver 115 to have a conversation with the passenger 105 based on the recognized voice. For example, when recognizing a spoken voice of the passenger 105, the conversation service providing unit 260 may transmit the recognized voice data to the server (not illustrated) through the communication unit 210 and then receive, from the server (not illustrated), a response derived based on the voice data.

The conversation service providing unit 260 may output the response based on the character information set for the virtual driver 115. Herein, the character information may include any one character selected by the passenger 105 from among a plurality of female characters, a plurality of male characters, and a plurality of game/animal characters. For example, the conversation service providing unit 260 may provide a conversation service by expressing a character, a movement, a facial expression, a tone, etc. of the virtual driver 115 in different ways depending on a predetermined gesture-related movement, facial expression or tone of each character based on the character information of the virtual driver 115.

In this case, the conversation service providing unit 260 may set a virtual speech position based on a position of the mouth of the virtual driver 115 and allow the response to be output based on the set virtual speech position. Thus, the passenger 105 may feel like having a real conversation with the virtual driver 115.

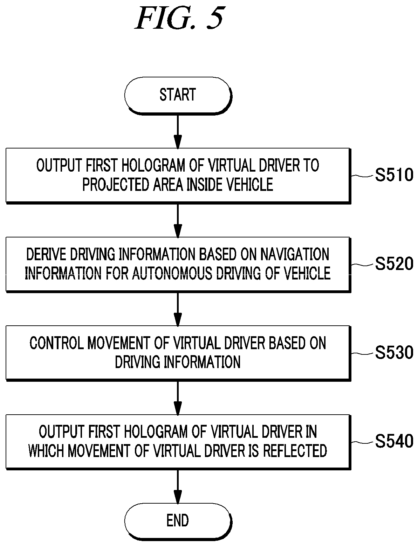

**FIG. 5** is a flowchart showing a method of providing a virtual driver service by the virtual driver service providing apparatus according to an embodiment of the present disclosure. The method of providing a virtual driver service by the virtual driver service providing apparatus 110 illustrated in **FIG. 5** includes the processes time-sequentially performed by the virtual driver service providing system 1 illustrated in **FIG. 1** to **FIG. 4****.** Therefore, the above descriptions of the processes may also be applied to the method of providing a virtual driver service by the virtual driver service providing apparatus 110 according to the embodiment illustrated in **FIG. 1** to **FIG. 4** even though they are omitted hereinafter.

In a process S510, the virtual driver service providing apparatus 110 may output a first hologram of the virtual driver 115 to a projected area inside the vehicle 100.

In a process S520, the virtual driver service providing apparatus 110 may derive driving information based on navigation information for autonomous driving of the vehicle 100.

In a process S530, the virtual driver service providing apparatus 110 may control a movement of the virtual driver 115 based on the driving information.

In a process S540, the virtual driver service providing apparatus 110 may output the first hologram of the virtual driver 115 in which the movement of the virtual driver 115 is reflected.

In the descriptions above, the processes S510 to S540 may be divided into additional processes or combined into fewer processes depending on an embodiment. In addition, some of the processes may be omitted and the sequence of the processes may be changed if necessary.

The method of providing a virtual driver service by the virtual driver service providing apparatus illustrated in **FIG**. **1** to **FIG**. **5** can be implemented as a computer program stored in a medium to be executed by a computer or a storage medium including instructions executable by a computer. Also, the method of providing a virtual driver service by the virtual driver service providing apparatus illustrated in **FIG**. **1** to **FIG**. **5** can be implemented as a computer program stored in a medium to be executed by a computer.

A computer-readable medium can be any usable medium which can be accessed by the computer and includes all volatile/non-volatile and removable/non-removable media. Further, the computer-readable medium may include all computer storage media. The computer storage media include all volatile/non-volatile and removable/non-removable media embodied by a certain method or technology for storing information such as computer-readable instruction code, a data structure, a program module or other data.

The above description of the present disclosure is provided for the purpose of illustration, and it would be understood by a person with ordinary skill in the art that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

## Claims

1. An apparatus for providing a virtual driver service, comprising:
a hologram output unit configured to output a first hologram of a virtual driver to a projected area inside a vehicle;
a driving information derivation unit configured to derive driving information based on navigation information for autonomous driving of the vehicle; and
a virtual driver control unit configured to control a movement of the virtual driver based on the driving information,
wherein the hologram output unit outputs the first hologram of the virtual driver in which the movement of the virtual driver is reflected.

2. The apparatus of Claim 1,
wherein the virtual driver control unit is configured to control the movement of the virtual driver so that the virtual driver performs virtual manipulation of a steering device based on the driving information and a position of the steering device.

3. The apparatus of Claim 1,
wherein if the steering device of the vehicle is built in the vehicle, the hologram output unit is further configured to output a second hologram of a virtual steering device.

4. The apparatus of Claim 3,
wherein the virtual driver control unit is configured to control the movement of the virtual driver so that the virtual driver performs virtual manipulation of the virtual steering device based on the driving information.

5. The apparatus of Claim 1, further comprising:
a communication unit configured to communicate with at least one of a vehicle device or a user device.

6. The apparatus of Claim 5,
wherein the communication unit is configured to receive setting information of the virtual driver from the user device.

7. The apparatus of Claim 6, further comprising:
an adjustment unit configured to adjust a position of the projected area, a posture of the virtual driver, and positions of body parts of the virtual driver based on the received setting information.

8. The apparatus of Claim 5,
wherein the communication unit is configured to receive navigation information for autonomous driving of the vehicle from at least one of the user device or the vehicle device.

9. The apparatus of Claim 1, further comprising:
a conversation service providing unit configured to recognize a spoken voice of a passenger in the vehicle and enable the virtual driver to have a conversation with the passenger based on the recognized voice.

10. A method for providing a virtual driver service, comprising:
outputting a first hologram of a virtual driver to a projected area inside a vehicle;
deriving driving information based on navigation information for autonomous driving of the vehicle;
controlling a movement of the virtual driver based on the driving information; and
outputting the first hologram of the virtual driver in which the movement of the virtual driver is reflected.

11. The method for providing a virtual driver service of Claim 10, further comprising:
controlling the movement of the virtual driver so that the virtual driver performs virtual manipulation of a steering device based on the driving information and a position of the steering device.

12. The method for providing a virtual driver service of Claim 10, further comprising:
outputting a second hologram of a virtual steering device if the steering device of the vehicle is built in the vehicle.

13. The method for providing a virtual driver service of Claim 12, further comprising:
controlling the movement of the virtual driver so that the virtual driver performs virtual manipulation of the virtual steering device based on the driving information.

14. The method for providing a virtual driver service of Claim 10, further comprising:
communicating with at least one of a vehicle device or a user device.

15. The method for providing a virtual driver service of Claim 14, further comprising:
receiving setting information of the virtual driver from the user device.

16. The method for providing a virtual driver service of Claim 15, further comprising:
adjusting a position of the projected area, a posture of the virtual driver, and positions of body parts of the virtual driver based on the received setting information.

17. The method for providing a virtual driver service of Claim 14,
wherein the communicating with at least one of a vehicle device or a user device includes:
receiving navigation information for autonomous driving of the vehicle from at least one of the user device or the vehicle device.

18. The method for providing a virtual driver service of Claim 10, further comprising:
recognizing a spoken voice of a passenger in the vehicle and enabling the virtual driver to have a conversation with the passenger based on the recognized voice.

19. A computer program stored in a medium including a sequence of instructions for providing a virtual driver service, which when executed by a computing device, cause the computing device to:
output a first hologram of a virtual driver to a projected area inside a vehicle;
derive driving information based on navigation information for autonomous driving of the vehicle;
control a movement of the virtual driver based on the driving information; and
output the first hologram of the virtual driver in which the movement of the virtual driver is reflected.
